# EUROPEAN PATENT SPECIFICATION

(11) **EP 3 725 627 B1**
(45) Date of publication and mention of the grant of the patent: **01.11.2023**
(21) Application number: 18888943.0
(22) Date of filing: 06.12.2018
(51) Int. Cl.: B60W 30/09, B60T 7/12, B60W 30/095

(54) **METHOD FOR GENERATING VEHICLE CONTROL COMMAND, AND VEHICLE CONTROLLER AND STORAGE MEDIUM**
VERFAHREN ZUR ERZEUGUNG EINES FAHRZEUGSTEUERUNGSBEFEHLS SOWIE FAHRZEUGSTEUERUNG UND SPEICHERMEDIUM
PROCÉDÉ DE GÉNÉRATION D'INSTRUCTION DE COMMANDE DE VÉHICULE, DISPOSITIF DE COMMANDE DE VÉHICULE ET SUPPORT DE STOCKAGE

(30) Priority: 15.12.2017 CN 201711346063; 20.03.2018 CN 201810230207
(43) Date of publication of application: 21.10.2020
(73) Proprietor: NIO (Anhui) Holding Co., Ltd., Hefei City, Anhui Province (CN)
(72) Inventor: HU, Chuanyuan, Hong Kong (CN)
(74) Representative: Patentanwaltskanzlei WILHELM & BECK
(86) International application number: PCT/CN2018/119582
(87) International publication number: WO 2019/114604

(56) References cited:
- CN-A- 101 434 234
- CN-A- 102 452 396
- CN-A- 103 072 575
- CN-A- 105 966 396
- CN-A- 106 157 696
- CN-A- 108 569 287
- CN-B- 102 390 320
- CN-B- 102 745 194
- DE-A1-102010 006 214
- US-A1- 2007 192 030
- US-A1- 2010 209 892
- US-A1- 2011 153 166
- US-A1- 2012 101 701
- US-A1- 2015 025 784

## Description

### Technical Field

The invention relates to an automotive electronic technology, and in particular to a method for generating a vehicle control command in an emergency state, a vehicle controller, and a computer storage medium implementing the method.

### Background Art

An autonomous emergency braking system (AEB) is configured to avoid a rear-end collision or reduce injury caused by the rear-end collision. A typical autonomous braking system generates a timing for a braking command in the following manner: according to the speed of a present vehicle and of a vehicle ahead and a distance therebetween, a time-to-collision (TTC) of the present vehicle relative to the vehicle ahead is determined, then the time-to-collision is compared with the latest time to activate braking (TTAB) of the present vehicle, and if the TTC is smaller than the TTAB, it means that the AEB system must immediately execute a braking operation to avoid a collision.

When a vehicle travels, the condition of an adjacent lane may not be fully grasped, which limits the use of a strategy which avoids a vehicle collision by steering. Accordingly, in certain emergency situations, although the AEB sends out a deceleration command, it would still collide with the vehicle ahead, and only the collision degree can be reduced, but the collision cannot be effectively avoided by steering. Therefore, a method and apparatus for determining, in an emergency state, a control strategy are needed, wherein the method and apparatus can make full use of a steering operation on the vehicle to reduce the occurrence of collision.

US 2012/0101701 A1 discloses a collision avoidance system in a host vehicle that employs combined automatic braking and steering. The collision avoidance system defines thresholds that identify a time to collision with a target vehicle by the host vehicle that are based on the speed of the host vehicle, the acceleration of the host vehicle, the speed of the target vehicle, the acceleration of the target vehicle, the distance to the target vehicle from the host vehicle and a coefficient of friction of the roadway. The collision avoidance system provides full automatic collision avoidance braking if the time to collision is less than one threshold and the lane adjacent to the host vehicle is not clear, and the system provides both automatic steering and braking of the host vehicle if the time to collision is less than another threshold and the lane adjacent to the host vehicle is clear.

### Summary of the invention

The invention for which protection is sought is defined by the independent claim. The dependent claims concern particular embodiments.

An object of the invention is to provide a method for generating, in an emergency state, a vehicle control command, and by means of overall consideration of the condition of the front of a lane where a present vehicle is located and the condition of an adjacent lane, the method determines an appropriate control strategy, thereby improving driving safety.

According to one aspect of the invention, a method for determining, in an emergency state, a braking control strategy comprises the following steps:
determining, based on the speed of a present vehicle and of a vehicle ahead and a relative distance therebetween, a first time-to-collision TTC1 of the present vehicle relative to the vehicle ahead located in the same lane; and
generating, when the TTC1 is smaller than or equal to the latest time to activate braking TTAB of the present vehicle, a control command in the following manner:
   generating, if the speed of the present vehicle is lower than a first speed threshold value, a braking command; and
   generating, if the speed of the present vehicle is greater than or equal to the first speed threshold value and an adjacent lane is in an enterable state, a steering command, or otherwise generating the braking command.

Preferably, in the above-mentioned method, if a second time-to-collision TTC2 between a vehicle located in the adjacent lane and the present vehicle is greater than a set threshold value, it is determined that the adjacent lane is in the enterable state.

Preferably, in the above-mentioned method, based on a relative distance between the present vehicle and the vehicle located in the adjacent lane and the speed of the present vehicle and of the vehicle located in the adjacent lane, the TTC2 is determined.

According to the invention, in the above-mentioned method, the TTAB is determined in the following manner:
determining a standard value of the TTAB;
determining a calibrated value of the TTAB, wherein the calibrated value is associated with at least one of the following attributes: a vehicle kinematics attribute, a vehicle user operation attribute, an object ahead kinematics attribute, and a road ahead attribute; and
combining the standard value and the calibrated value of the TTAB to determine TTAB for a current user.

Preferably, in the above-mentioned method, the standard value of the TTAB is determined based on driving behaviours of a group of users.

According to the invention, in the above-mentioned method, the calibrated value of the TTAB is determined by utilising a deep learning method.

According to the invention, in the above-mentioned method, a model of the deep learning method comprises:
an input layer, wherein the input layer comprises a plurality of input nodes, and each of the input nodes is associated with one of the following attributes: a vehicle kinematics attribute, a vehicle user operation attribute, an object ahead kinematics attribute, and a road ahead attribute;
a hidden layer; and
an output layer, wherein the output layer comprises an output node in regard to the calibrated value of the TTAB, wherein the input nodes are associated with the vehicle kinematics attribute, the vehicle kinematics attribute is a degree of coincidence between travelling paths of the present vehicle and the vehicle ahead, and a vehicle longitudinal and transverse motions classifier is utilised to map a degree of coincidence associated with the current user to a corresponding category.

Preferably, in the above-mentioned method, the input nodes are associated with the vehicle user operation attribute, the vehicle user operation attribute is a driving operation style, and a driving operation style classifier is utilised to map a driving operation style associated with the current user to a corresponding category.

Preferably, in the above-mentioned method, based on historical and current position information of an accelerator pedal, a brake pedal and a steering wheel, categories of driving operation styles are classified.

Preferably, in the above-mentioned method, the input nodes are associated with the object ahead kinematics attribute, the object ahead kinematics attribute is the position, speed and acceleration of an object ahead relative to the present vehicle, and an object ahead longitudinal and transverse motions classifier is utilised to map an object ahead kinematics attribute associated with the current user to a corresponding category.

Preferably, in the above-mentioned method, the input nodes are associated with the road ahead attribute, the road ahead attribute is a timing for prompting, based on road information, a driver to take a pre-action, and a road ahead information classifier is utilised to map a road ahead attribute associated with the current user to a corresponding category.

According to another aspect of the invention, a vehicle controller comprises a memory, a processor, and a computer program which is stored on the memory and operable on the processor, wherein the program is executed to implement a method as described above.

According to an example not forming part of the invention, an apparatus for determining, in an emergency state, a braking control strategy comprises:
a first module, configured to determine, according to the speed of a present vehicle and of a vehicle ahead and a relative distance therebetween, a first time-to-collision TTC1 of the present vehicle relative to the vehicle ahead in the same lane; and
a second module, configured to generate, when the TTC1 is smaller than or equal to the latest time to activate braking TTAB of the present vehicle, a control command in the following manner:
   generating, if the speed of the present vehicle is lower than a first speed threshold value, a braking command; and
   generating, if the speed of the present vehicle is greater than or equal to the first speed threshold value and an adjacent lane is in an enterable state, a steering command, or otherwise generating the braking command.

According to still another aspect of the invention, a computer-readable storage medium is provided, on which a computer program is stored, and the program implements, when executed by a processor, a method as described above.

According to the invention, by means of overall consideration of the condition of the front of the lane where the present vehicle is located and the condition of the adjacent lane, the appropriate control strategy is determined, and therefore, the driving safety may be improved.

### Brief Description of the Drawings

The foregoing and/or other aspects and advantages of the invention will be clearer and more comprehensible from the following description of various aspects with reference to the accompanying drawings, and the same or similar units in the accompanying drawings are represented by the same numerals. The accompanying drawings comprise:
Fig. 1 is a flowchart of a method for determining, in an emergency state, a braking control strategy according to an embodiment of the invention.
Fig. 2 is a schematic diagram of a model of a deep learning method, wherein the model may be applied to a correction process of TTAB.
Fig. 3 is a flowchart of a method for calibrating an autonomous emergency braking parameter.
Fig. 4 is a schematic block diagram of a vehicle controller according to another embodiment of the invention.
Fig. 5 is a schematic block diagram of an apparatus for determining, in an emergency state, a braking control strategy according to an example not forming part of the invention.

### Detailed Description of Embodiments

The invention is described below more comprehensively with reference to the accompanying drawings showing schematic embodiments of the invention. However, the invention may be implemented in different forms but should not be construed as being only limited to various embodiments provided herein. The above-mentioned various embodiments provided are intended to make the description comprehensive and complete so as to more comprehensively convey the scope of protection of the invention to a person skilled in the art.

In this description, terms such as "comprising" and "comprise" indicate that in addition to units and steps that are directly and clearly described in the description and claims, other units and steps that are not directly or clearly described are not excluded in the technical solutions of the invention.

Terms such as "first" and "second" do not indicate sequences, in terms of time, space, size and the like, of the units, and are only used for distinguishing various units.

"Coupled" should be construed as comprising a case in which electrical energy or an electrical signal is directly transferred between two units or a case in which the electrical energy or the electrical signal is indirectly transferred via one or more third units.

According to one aspect of the invention, different control strategies (control commands) are used for different speeds of a present vehicle. For example, when the speed of the present vehicle is low, if there is a dangerous situation that the present vehicle may collide with a vehicle ahead, a strategy for braking to take precedence is used, that is, a control command for braking the vehicle is generated; and when the speed of the present vehicle is high, if there is a dangerous situation that the present vehicle may collide with a vehicle ahead, a strategy for steering to take precedence is used, that is, when it is determined that an adjacent lane is in a drivable state, a control command for steering the vehicle is preferentially generated, and only when the adjacent lane is in a non-drivable state, a braking command is generated to reduce consequences caused by a collision.

According to another aspect of the invention, if a time-to-collision between a vehicle located in the adjacent lane and the present vehicle is greater than a set threshold value, it is determined that the adjacent lane is in an enterable state. Preferably, based on a transverse distance between the present vehicle and the vehicle located in the adjacent lane and the speed and acceleration of the present vehicle and of the vehicle located in the adjacent lane, a second time-to-collision is determined.

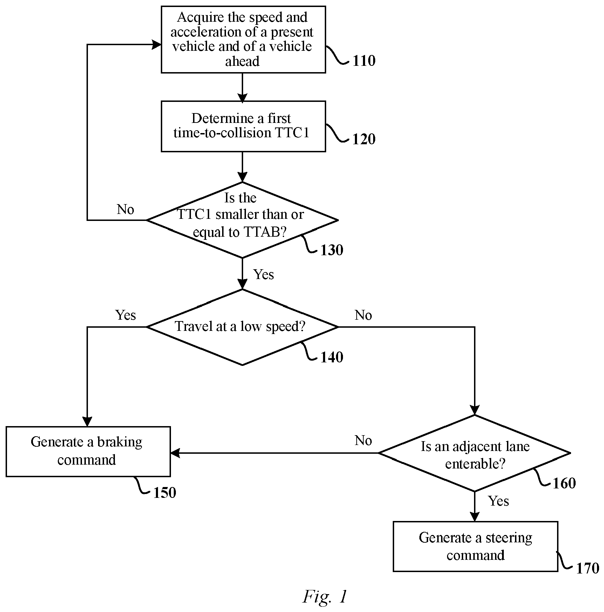

Fig. 1 is a flowchart of a method for generating, in an emergency state, a vehicle control command according to an embodiment of the invention.

As shown in Fig. 1, in step 110, a vehicle controller acquires the speed of a present vehicle and of a vehicle ahead and a relative distance therebetween. Then step 120, in which the vehicle controller predicts, based on the foregoing speed and the foregoing relative distance, a first time-to-collision TTC1 of the present vehicle relative to the vehicle ahead in the same lane, is entered. The relative distance herein may be a transverse distance (a distance, in a direction perpendicular to a travelling lane, between the two vehicles) and a longitudinal distance (a distance, in the direction of the travelling lane, between the two vehicles) between the two vehicles, and in certain conditions of simplified calculation, the relative distance may also take into account only the longitudinal distance. In certain embodiments, in order to make the calculation of the first time-to-collision TTC1 more accurate, the acceleration of a present vehicle and of a vehicle ahead as well as certain other speed compensation may be introduced to perform calculation on the basis of utilising the speed of the present vehicle and of the vehicle ahead and a relative distance therebetween.

Then step 130, in which the vehicle controller determines whether the TTC1 is smaller than or equal to the latest time to activate braking TTAB of the present vehicle, is entered, and if the TTC1 is smaller than or equal to the TTAB, the method skips to step 140, and otherwise, the method returns to step 110.

In step 140, the vehicle controller determines whether the speed of the present vehicle is lower than a first speed threshold value V1, and if the speed of the present vehicle is lower than the threshold value V1, it is considered that the present vehicle travels at a low speed, and step 150 is entered, and otherwise, step 160 is entered.

In step 150, the vehicle controller generates the control command for braking the vehicle.

In step 160, the vehicle controller further determines whether a lane adjacent to the lane where the present vehicle is located is in an enterable state, and if yes, step 170 is entered, and otherwise, step 150 is entered. In step 160, the vehicle controller, by comparing the second time-to-collision TTC2 between a vehicle located in the adjacent lane and the present vehicle, determines the enterable state. Specifically, if the TTC2 is greater than a set threshold value, it is determined that the adjacent lane is in the enterable state. In this embodiment, preferably, based on a relative distance between the present vehicle and the vehicle located in the adjacent lane and the speed of the present vehicle and of the vehicle located in the adjacent lane, the second time-to-collision TTC2 is determined. It should be noted that there may be a plurality of vehicles (for example, located on the rear side and the front of the present vehicle) located in the adjacent lane, and therefore, there may be a plurality of second time-to-collision TTC2. In such a condition, only if the plurality of TTC2 is all greater than the set threshold value, it is determined that the adjacent lane is in the enterable state. The relative distance herein may be a transverse distance (a distance, in a direction perpendicular to a travelling lane, between the two vehicles) and a longitudinal distance (a distance, in the direction of the travelling lane, between the two vehicles) between the two vehicles. In certain embodiments, in order to make the calculation of the second time-to-collision TTC2 more accurate, the acceleration of a present vehicle and of a vehicle ahead as well as certain other speed compensation may be introduced to perform calculation on the basis of utilising the speed of the present vehicle and of the vehicle ahead and a relative distance therebetween.

In step 170, the vehicle controller generates a control command for steering the vehicle.

In this embodiment, the latest time to activate braking (TTAB) of the present vehicle is self-adaptively corrected for a driving behaviour of a user. Hence, the TTAB for a current user may be determined by combining (for example, adding a standard value and a calibrated value or adding same after certain weights are separately given to the standard value and the calibrated value) a standard value and a calibrated value of the TTAB.

The calibrated value of the TTAB is determined by utilising a deep learning method. After intensive research, an inventor of the invention proposes a model with the deep learning method suitable for determining the calibrated value of the TTAB. Further description is made below.

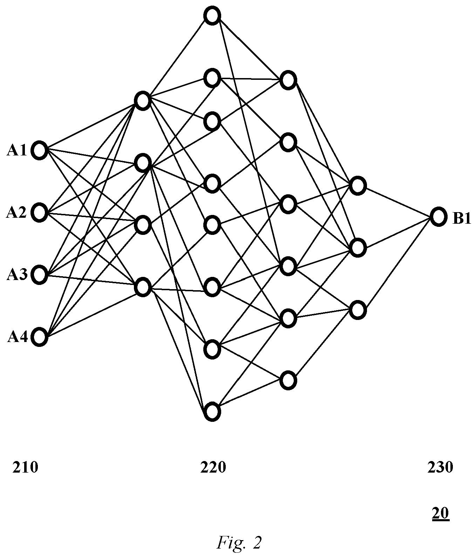

Fig. 2 is a schematic diagram of a model of a deep learning method, wherein the model may be applied to a correction process of TTAB. As shown in Fig. 2, an input layer 210 of the model 20 comprises a plurality of input nodes A1 to A4, and each of the input nodes A1 to A4 is associated with at least one of the following attributes: a vehicle kinematics attribute, a vehicle user operation attribute, an object ahead kinematics attribute, and a road ahead attribute.

It should be noted that variables associated with driving behaviours of users are numerous. These variables, for example, comprise but are not limited to: a longitudinal motion speed of a present vehicle, a transverse motion speed of the present vehicle, a longitudinal acceleration of the present vehicle, a transverse acceleration of the present vehicle, an angular yaw velocity of the present vehicle, an opening percentage of an accelerator pedal of the present vehicle, an opening percentage of a brake pedal of the present vehicle, a steering wheel position of the present vehicle, a longitudinal distance of a moving object ahead relative to the present vehicle, a transverse distance of the moving object ahead relative to the present vehicle, a longitudinal motion speed of the moving object ahead, a transverse motion speed of the moving object ahead, a longitudinal acceleration of the moving object ahead, a transverse acceleration of the moving object ahead, a longitudinal distance of a stationary object ahead relative to the present vehicle, a transverse distance of the stationary object ahead relative to the present vehicle, gradient information of a road ahead, curvature information of the road ahead, speed limit information of the road ahead, and the like. If these variables are used as nodes of the input layer, a model structure and model training will become complicated.

For this problem, the inventor of the invention creatively aggregates various variables into the vehicle kinematics attributes, the vehicle user operation attribute, the object ahead kinematics attribute and the road ahead attribute, serving as input variables of the deep learning model. Specifically, each attribute may be determined based on specific subsets of the above-mentioned variables.

For example, a current travelling path of the present vehicle may be calculated based on the longitudinal motion speed of the present vehicle, the transverse motion speed of the present vehicle, the longitudinal acceleration of the present vehicle, the transverse acceleration of the present vehicle, and the angular yaw velocity of the present vehicle, and in combination with historical travelling paths of the present vehicle, subsequent travelling behaviours of the present vehicle are predicted to be used as a kind of the vehicle kinematics attributes. In addition, based on the current travelling path of the present vehicle and in combination with a travelling path of a vehicle ahead (which is calculated based on a transverse motion speed of the vehicle ahead, a longitudinal acceleration of the vehicle ahead, a transverse acceleration of the vehicle ahead, and an angular yaw velocity of the vehicle ahead), a degree of coincidence between the travelling path of the present vehicle and the travelling path of the vehicle ahead is further acquired, and the degree of coincidence may be used as another kind of the vehicle kinematics attributes. Preferably, a vehicle longitudinal and transverse motions classifier may be utilised to map a degree of coincidence associated with a current user to a corresponding category. The degree of coincidence, for example, comprises three categories: low, medium and high.

The vehicle user operation attribute may be represented by using a driving operation style associated with historical and current position information of an accelerator pedal, a brake pedal and a steering wheel. Preferably, a driving operation style classifier may be utilised to map a driving operation style associated with the current user to a corresponding category. The driving operation style, for example, comprises five categories: very mild, relatively mild, moderate, relatively aggressive and very aggressive.

The object ahead kinematics attribute may be represented by using the position and the speed of an object ahead relative to the present vehicle (such as the longitudinal distance of the moving object ahead relative to the present vehicle, the transverse distance of the moving object ahead relative to the present vehicle, the longitudinal motion speed of the moving object ahead, the transverse motion speed of the moving object ahead, the longitudinal acceleration of the moving object ahead, the transverse acceleration of the moving object ahead, the longitudinal distance of the stationary object ahead relative to the present vehicle, and the transverse distance of the stationary object ahead relative to the present vehicle). Preferably, an object ahead longitudinal and transverse motions classifier may be utilised to map an object ahead kinematics attribute associated with the current user to a corresponding category. The object ahead kinematics attribute, for example, comprises three categories: slow, constant and fast.

The road ahead attribute may be represented by using a timing for prompting, based on road information (for example, the gradient information of the road ahead, the curvature information of the road ahead, and the speed limit information of the road ahead), a driver to take a pre-action. Preferably, a road ahead information classifier is utilised to map a road ahead attribute associated with the current user to a corresponding category. The timing for taking the pre-action, for example, comprises three categories: early, medium and late.

A hidden layer 220 in the model shown in Fig. 2 is a multilayered structure, and the number of layers of the hidden layer, for example, may be from 4 to 100.

In the embodiment shown in Fig. 2, an output layer 230 comprises an output node B1 in regard to a calibrated value of the TTAB.

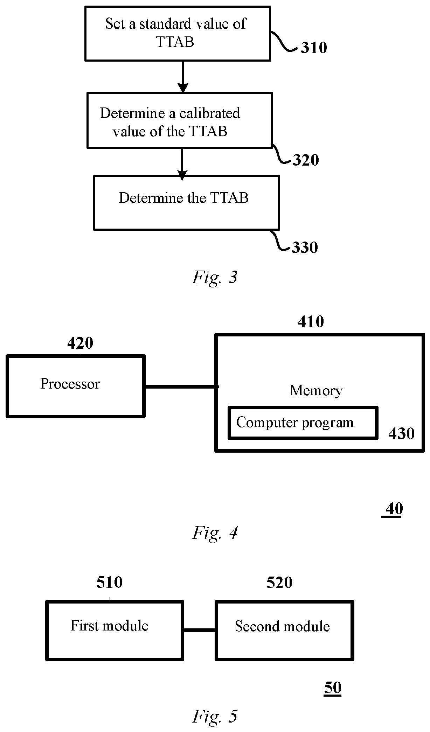

Fig. 3 is a flowchart of a method for calibrating an autonomous emergency braking parameter.

As shown in Fig. 3, in step 310, a vehicle controller sets a standard value of the latest time to activate braking (TTAB) of a present vehicle. In this embodiment, the standard value of the TTAB is determined based on driving behaviours of a group of users, for example, a statistical value based on a large number of users may be used as the standard value of the TTAB.

Then step 320, in which the vehicle controller determines a calibrated value of the TTAB, is entered. For example, the vehicle controller may utilise the above model, shown with the aid of Fig. 1, of the deep learning method to make determination.

Then step 330, in which the vehicle controller combines (for example, adding the standard value and the calibrated value or adding same after certain weights are separately given to the standard value and the calibrated value) the standard value and the calibrated value of the TTAB to determine TTAB for a current user, is entered.

Fig. 4 is a schematic block diagram of a vehicle controller according to another embodiment of the invention.

The vehicle controller 40, shown in Fig. 4, comprises a memory 410, a processor 420 and a computer program 430 which is stored on the memory 410 and operable on the processor 420, wherein the above method, with the aid of Figs. 1 to 3, for determining, in an emergency state, a vehicle control strategy may be implemented by executing the computer program 430.

Fig. 5 is a schematic block diagram of an apparatus for generating, in an emergency state, a vehicle control command according to an example not forming part of the invention.

The apparatus 50, shown in Fig. 5, comprises a first module 510 and a second module 520. The first module 510 is configured to determine, based on the speed and acceleration of a present vehicle and of a vehicle ahead, a first time-to-collision (TTC1) of the present vehicle relative to the vehicle ahead located in the same lane. The second module 520 is configured to generate, when the TTC1 is smaller than or equal to the latest time to activate braking TTAB of the present vehicle, a control command in the following manner:
generating, if the speed of the present vehicle is lower than a first speed threshold value, a braking command; and
generating, if the speed of the present vehicle is greater than or equal to the first speed threshold value and an adjacent lane is in an enterable state, a steering command, or otherwise generating the braking command.

According to another aspect of the invention, a computer-readable storage medium is further provided, on which a computer program is stored, and the program implements, when executed by a processor, the method for determining, in the emergency state, a vehicle control strategy, which is described (referring to Figs. 1 to 3) in the foregoing embodiments.

The embodiments and examples proposed herein are provided to describe as adequately as possible the embodiments according to the technology and specific applications thereof, thereby enabling a person skilled in the art to implement and use the invention. However, a person skilled in the art shall know that the above description and examples are provided only for facilitating description and illustration. The description proposed is not intended to cover all aspects of the invention or limit the invention to the disclosed precise forms.

In view of the above, the scope of the invention is determined by the claims.

## Claims

1. A method for generating, in an emergency state, a vehicle control command, comprising the following steps:
determining (120), based on the speed of a present vehicle and of a vehicle ahead and a relative distance therebetween, a first time-to-collision TTC1 of the present vehicle relative to the vehicle ahead located in the same lane; and
generating, when the TTC1 is smaller than or equal to the latest time to activate braking TTAB of the present vehicle (130), a control command in the following manner:
generating, if the speed of the present vehicle is lower than a first speed threshold value (140), a braking command (150); and
generating, if the speed of the present vehicle is greater than or equal to the first speed threshold value (140) and an adjacent lane is in an enterable state (160), a steering command (170), or otherwise generating the braking command (150), **characterized in that**
the TTAB is determined in the following manner: determining a standard value of the TTAB (310); determining a calibrated value of the TTAB (320), wherein the calibrated value is associated with at least one of the following attributes: a vehicle kinematics attribute, a vehicle user operation attribute, an object ahead kinematics attribute, and a road ahead attribute; and combining the standard value and the calibrated value of the TTAB to determine TTAB for a current user (330),
the calibrated value of the TTAB is determined by utilising a deep learning method,
a model (20) of the deep learning method comprises: an input layer (210), wherein the input layer (210) comprises a plurality of input nodes, and each of the input nodes is associated with at least one of the following attributes: a vehicle kinematics attribute, a vehicle user operation attribute, an object ahead kinematics attribute, and a road ahead attribute; a hidden layer (220); and an output layer (230), wherein the output layer (230) comprises an output node in regard to the calibrated value of the TTAB, the input nodes are associated with the vehicle kinematics attribute, the vehicle kinematics attribute is a degree of coincidence between travelling paths of the present vehicle and the vehicle ahead, and a vehicle longitudinal and transverse motions classifier is utilised to map a degree of coincidence associated with the current user to a corresponding category.

2. The method of claim 1, **characterized in that**, if a second time-to-collision TTC2 between a vehicle located in the adjacent lane and the present vehicle is greater than a set threshold value, it is determined that the adjacent lane is in the enterable state.

3. The method of claim 2, **characterized in that**, based on a relative distance between the present vehicle and the vehicle located in the adjacent lane and the speed of the present vehicle and of the vehicle located in the adjacent lane, the TTC2 is determined.

4. The method of claim 1, **characterized in that**, the standard value of the TTAB is determined based on driving behaviours of a group of users.

5. The method of claim 1, **characterized in that**, the input nodes are associated with the vehicle user operation attribute, the vehicle user operation attribute is a driving operation style, and a driving operation style classifier is utilised to map a driving operation style associated with the current user to a corresponding category.

6. The method of claim 5, **characterized in that**, based on historical and current position information of an accelerator pedal, a brake pedal and a steering wheel, categories of driving operation styles are classified.

7. The method of claim 1, **characterized in that**, the input nodes are associated with the object ahead kinematics attribute, the object ahead kinematics attribute is the position, speed and acceleration of an object ahead relative to the present vehicle, and an object ahead longitudinal and transverse motions classifier is utilised to map an object ahead kinematics attribute associated with the current user to a corresponding category.

8. The method of claim 1, **characterized in that**, the input nodes are associated with the road ahead attribute, the road ahead attribute is a timing for prompting, based on road information, a driver to take a pre-action, and a road ahead information classifier is utilised to map a road ahead attribute associated with the current user to a corresponding category.

9. A vehicle controller (40), comprising a memory (410), a processor (420), and a computer program (430) which is stored on the memory (410) and operable on the processor (420), **characterized in that**, the program (430) is executed to implement a method of any one of claims 1-8.

10. A computer-readable storage medium, on which a computer program (430) is stored, **characterized in that**, the program (430) implements, when executed by a processor (420), a method of any one of claims 1-8.

## Patentansprüche

1. Verfahren zum Erzeugen, in einem Notzustand, eines Fahrzeugsteuerungsbefehls, umfassend die folgenden Schritte:
Bestimmen (120), auf der Grundlage der Geschwindigkeit eines betreffenden Fahrzeugs und eines vorausfahrenden Fahrzeugs und eines relativen Abstands dazwischen, einer ersten Zeit bis zur Kollision, TTC1, des betreffenden Fahrzeugs relativ zum vorausfahrenden Fahrzeug, das sich auf der gleichen Spur befindet; und
Erzeugen, wenn die TTC1 kleiner oder gleich der spätesten Zeit zum Aktivieren von Bremsung, TTAB, des betreffenden Fahrzeugs (130) ist, eines Steuerbefehls in der folgenden Weise: Erzeugen, wenn die Geschwindigkeit des betreffenden Fahrzeugs kleiner als ein erster Geschwindigkeitsschwellenwert (140) ist, eines Bremsbefehls (150); und
Erzeugen, wenn die Geschwindigkeit des betreffenden Fahrzeugs größer oder gleich dem ersten Geschwindigkeitsschwellenwert (140) ist und eine benachbarte Spur sich in einem einfahrbaren Zustand (160) befindet, eines Lenkbefehls (170), oder andernfalls Erzeugen des Bremsbefehls (150), **dadurch gekennzeichnet,**
**dass**
die TTAB auf folgende Weise bestimmt wird: Bestimmen eines Standardwerts der TTAB (310); Bestimmen eines kalibrierten Werts der TTAB (320), wobei der kalibrierte Wert mindestens einem der folgenden Attribute zugeordnet ist: einem Fahrzeugkinematik-Attribut, einem Fahrzeugbenutzer-Betriebsattribut, einem Objekt-voraus-Kinematik-Attribut und einem Straße-voraus-Attribut; und
Kombinieren des Standardwerts und des kalibrierten Werts der TTAB zum Bestimmen der TTAB für einen aktuellen Benutzer (330),
der kalibrierte Wert der TTAB durch Verwenden eines Deep-Learning-Verfahrens bestimmt wird, wobei ein Modell (20) des Deep-Learning-Verfahrens umfasst: eine Eingabeschicht (210), wobei die Eingabeschicht (210) eine Vielzahl von Eingabeknoten umfasst und jeder der Eingabeknoten mindestens einem der folgenden Attribute zugeordnet ist: einem Fahrzeugkinematik-Attribut, einem Fahrzeugbenutzer-Betriebsattribut, einem Objekt-voraus-Kinematik-Attribut und einem Straße-voraus-Attribut;
eine versteckte Schicht (220); und eine Ausgabeschicht (230), wobei die Ausgabeschicht (230) einen Ausgabeknoten in Bezug auf den kalibrierten Wert der TTAB umfasst,
die Eingabeknoten dem Fahrzeugkinematik-Attribut zugeordnet sind, das Fahrzeugkinematik-Attribut ein Grad der Übereinstimmung zwischen den Fahrwegen des betreffenden Fahrzeugs und des vorausfahrenden Fahrzeugs ist und ein Klassifizierer für Längs- und Querbewegungen des Fahrzeugs verwendet wird, um einen dem aktuellen Benutzer zugeordneten Übereinstimmungsgrad einer entsprechenden Kategorie zuzuordnen.

2. Verfahren nach Anspruch 1, **dadurch gekennzeichnet, dass**, wenn eine zweite Zeit bis zur Kollision, TTC2, zwischen einem Fahrzeug, das sich auf der benachbarten Spur befindet, und dem betreffenden Fahrzeug größer als ein eingestellter Schwellenwert ist, bestimmt wird, dass die benachbarte Spur sich im einfahrbaren Zustand befindet.

3. Verfahren nach Anspruch 2, **dadurch gekennzeichnet, dass** auf der Grundlage eines relativen Abstands zwischen dem betreffenden Fahrzeug und dem Fahrzeug, das sich auf der benachbarten Spur befindet, und der Geschwindigkeit des betreffenden Fahrzeugs und des Fahrzeugs, das sich auf der benachbarten Spur befindet, die TTC2 bestimmt wird.

4. Verfahren nach Anspruch 1, **dadurch gekennzeichnet, dass** der Standardwert der TTAB auf der Grundlage des Fahrverhaltens einer Gruppe von Benutzern bestimmt wird.

5. Verfahren nach Anspruch 1, **dadurch gekennzeichnet, dass** die Eingabeknoten dem Fahrzeugbenutzer-Betriebsattribut zugeordnet sind, das Fahrzeugbenutzer-Betriebsattribut ein Fahrbetriebsstil ist und ein Fahrbetriebsstil-Klassifizierer verwendet wird, um einen dem aktuellen Benutzer zugeordneten Fahrbetriebsstil einer entsprechenden Kategorie zuzuordnen.

6. Verfahren nach Anspruch 5, **dadurch gekennzeichnet, dass** auf der Grundlage von historischen und aktuellen Positionsinformationen eines Fahrpedals, eines Bremspedals und eines Lenkrads Kategorien von Fahrstilen klassifiziert werden.

7. Verfahren nach Anspruch 1, **dadurch gekennzeichnet, dass** die Eingabeknoten dem Objekt-voraus-Kinematik-Attribut zugeordnet sind, das Objekt-voraus-Kinematik-Attribut die Position, die Geschwindigkeit und die Beschleunigung eines vorausliegenden Objekts in Bezug auf das aktuelle Fahrzeug ist und ein Klassifizierer für Längs- und Querbewegungen des vorausliegenden Objekts verwendet wird, um ein dem aktuellen Benutzer zugeordnetes Objekt-voraus-Kinematik-Attribut einer entsprechenden Kategorie zuzuordnen.

8. Verfahren nach Anspruch 1, **dadurch gekennzeichnet, dass** die Eingabeknoten dem Straße-voraus-Attribut zugeordnet sind, das Straße-voraus-Attribut ein Zeitpunkt ist, zu dem ein Fahrer auf der Grundlage von Straßeninformationen aufgefordert wird, eine Vorabmaßnahme zu ergreifen, und ein Klassifizierer für Straßeninformationen verwendet wird, um ein dem aktuellen Benutzer zugeordnetes Straße-voraus-Attribut einer entsprechenden Kategorie zuzuordnen.

9. Fahrzeugsteuerung (40), umfassend einen Speicher (410), einen Prozessor (420) und ein Computerprogramm (430), das im Speicher (410) gespeichert ist und vom Prozessor (420) ausgeführt werden kann, **dadurch gekennzeichnet, dass** das Programm (430) zum Implementieren eines Verfahrens nach einem der Ansprüche 1 bis 8 ausgeführt wird.

10. Computerlesbares Speichermedium, auf dem ein Computerprogramm (430) gespeichert ist, **dadurch gekennzeichnet, dass** das Programm (430) bei seiner Ausführung durch einen Prozessor (420) ein Verfahren nach einem der Ansprüche 1 bis 8 implementiert.

## Revendications

1. Procédé de génération, dans un état d'urgence, d'une instruction de commande de véhicule, comprenant les étapes suivantes :
la détermination (120), sur la base de la vitesse d'un véhicule présent et d'un véhicule devant et d'une distance relative entre eux, d'un premier délai avant collision TTC1 du véhicule présent par rapport au véhicule devant situé dans la même voie ; et
la génération, lorsque le TTC1 est inférieur ou égal au dernier moment pour activer le freinage TTAB du véhicule présent (130), d'une instruction de commande de la manière suivante :
la génération, si la vitesse du véhicule présent est inférieure à une première valeur seuil de vitesse (140), d'une instruction de freinage (150) ; et
la génération, si la vitesse du véhicule présent est supérieure ou égale à la première valeur seuil de vitesse (140) et si une voie adjacente est dans un état libre (160), d'une instruction de direction (170), sinon la génération de l'instruction de freinage (150), **caractérisé en ce que**
le TTAB est déterminé de la manière suivante : la détermination d'une valeur standard du TTAB (310) ; la détermination d'une valeur étalonnée du TTAB (320), dans lequel la valeur étalonnée est associée à au moins l'un des attributs suivants : un attribut de cinématique de véhicule, un attribut d'opération utilisateur de véhicule, un attribut de cinématique d'objet devant, et un attribut de route devant ; et la combinaison de la valeur standard et de la valeur étalonnée du TTAB pour déterminer le TTAB pour un utilisateur actuel (330),
la valeur étalonnée du TTAB est déterminée en utilisant une méthode d'apprentissage profond,
un modèle (20) de la méthode d'apprentissage profond comprend : une couche d'entrée (210), dans lequel la couche d'entrée (210) comprend une pluralité de noeuds d'entrée, et chacun des noeuds d'entrée est associé à au moins l'un des attributs suivants : un attribut de cinématique dé véhicule, un attribut d'opération utilisateur de véhicule, un attribut de cinématique d'objet devant, et un attribut de route devant ; une couche cachée (220) ; et une couche de sortie (230), dans lequel la couche de sortie (230) comprend un noeud de sortie par rapport à la valeur étalonnée du TTAB,
les noeuds d'entrée sont associés à l'attribut de cinématique de véhicule, l'attribut de cinématique de véhicule est un degré de coïncidence entre des chemins de trajectoire du véhicule présent et le véhicule devant, et un classificateur de mouvements longitudinaux et transversaux de véhicule est utilisé pour associer un degré de coïncidence associé à l'utilisateur actuel à une catégorie correspondante.

2. Procédé selon la revendication 1, **caractérisé en ce que**, si un second délai avant collision TTC2 entre un véhicule situé dans la voie adjacente et le véhicule présent est supérieur à une valeur seuil définie, il est déterminé que la voie adjacente est dans l'état libre.

3. Procédé selon la revendication 2, **caractérisé en ce que**, sur la base d'une distance relative entre le véhicule présent et le véhicule situé dans la voie adjacente et la vitesse du véhicule présent et du véhicule situé dans la voie adjacente, le TTC2 est déterminé.

4. Procédé selon la revendication 1, **caractérisé en ce que** la valeur standard du TTAB est déterminée sur la base de comportements de conduite d'un groupe d'utilisateurs.

5. Procédé selon la revendication 1, **caractérisé en ce que** les noeuds d'entrée sont associés à l'attribut d'opération utilisateur de véhicule, l'attribut d'opération utilisateur de véhicule est un style d'opération de conduite, et un classificateur de style d'opération de conduite est utilisé pour associer un style d'opération de conduite associé à l'utilisateur actuel à une catégorie correspondante.

6. Procédé selon la revendication 5, **caractérisé en ce que**, sur la base d'informations de position historiques et actuelles d'une pédale d'accélération, d'une pédale de freinage et d'un volant de direction, des catégories de styles d'opération de conduite sont classifiées.

7. Procédé selon la revendication 1, **caractérisé en ce que** les noeuds d'entrée sont associés à l'attribut de cinématique d'objet devant, l'attribut de cinématique d'objet devant est la position, la vitesse et l'accélération d'un objet devant par rapport au véhicule présent, et un classificateur de mouvements longitudinaux et transversaux d'objet devant est utilisé pour associer un attribut de cinématique d'objet devant associé à l'utilisateur actuel à une catégorie correspondante.

8. Procédé selon la revendication 1, **caractérisé en ce que** les noeuds d'entrée sont associés à l'attribut de route devant, l'attribut de route devant est un chronométrage pour inviter, sur la base d'informations de route, un conducteur à effectuer une pré-action, et un classificateur d'informations de route devant est utilisé pour associer un attribut de route devant associé à l'utilisateur actuel à une catégorie correspondante.

9. Dispositif de commande de véhicule (40), comprenant une mémoire (410), un processeur (420), et un programme informatique (430) qui est stocké sur la mémoire (410) et exécutable sur le processeur (420), **caractérisé en ce que** le programme (430) est exécuté pour mettre en œuvre un procédé selon l'une quelconque des revendications 1 à 8.

10. Support de stockage lisible par ordinateur, sur lequel un programme informatique (430) est stocké, **caractérisé en ce que** le programme (430) met en oeuvre, lorsqu'il est exécuté par un processeur (420), un procédé selon l'une quelconque des revendications 1 à 8.
